# EUROPEAN PATENT APPLICATION

(11) **EP 1 142 959 A1**
(43) Date of publication of application: **10.10.2001**
(21) Application number: 00954907.2
(22) Date of filing: 23.08.2000
(51) Int. Cl.: C08L 101/00, C08L 75/04, C08K 5/36, A01N 25/04

(54) **GEL-FORM MOLDED RESIN COMPOSITION, PACKAGED VOLATILE GEL-FORM CHEMICAL, AND PROCESS FOR PRODUCING THE SAME**

(30) Priority: 25.08.1999 JP 23814299; 06.10.1999 JP 28554399; 14.10.1999 JP 29258399; 30.11.1999 JP 34006999
(71) Applicant: Dai-Ichi Kogyo Seiyaku Co., Ltd., Kyoto-shi, Kyoto 600-8873 (JP)
(72) Inventor: KATAOKA, Hironori, Ikoma-gun, Nara 636-0801 (JP); HIRATSUNA, Satoshi, Kyoto-shi, Kyoto 604-8411 (JP)
(74) Representative: West, Alan Harry
(86) International application number: JP0005620
(87) International publication number: WO0114478

(57) **Abstract**

A gel-like resin molded object composition prepared by forming a resin molded object comprising allyl isothiocyanate and a resin base into a gel is provided. This gel-like resin molded object composition is used as a gel-like repellent composition or a gel-like antimicrobial and antifungal composition. The content of allyl isothiocyanate is within a range of more than 20% by weight and not more than 85% by weight based on the total weight of the gel-like resin molded object. The rubber hardness of the gel-like resin molded object is within a range from 0.1 to 100. The gel-like resin molded object of the present invention can be formed into a bulk, sheet, film, particle, powder or coating. The gel-like resin molded object can be used as a volatile gel-like packaged drug obtained by filling a container partly comprising at least a packaging material, through which a volatile gas of said volatile drug can permeate, with a drug mixture containing a volatile drug and a gelling drug, and gelling the drug mixture.

## Description

### Field of The Invention

The present invention relates to a gel-like resin molded object and, more particularly, to a gel-like resin molded object containing allyl isothiocyanate as an active ingredient, which exerts an effect in repellent purposes of noxious organisms and antimicrobial and antifungal purposes for a long period of time, a volatile gel-like packaged drug containing the gel-like resin molded object in a container, and a method of preparing the same.

### Prior Art

Allyl isothiocyanate has been known as a principal ingredient of green mustard and various applications have been suggested utilizing its stimulant action. For example, it has been suggested to utilize it as an active ingredient of antimicrobial drugs, antifungal drugs, preservatives, and repellents to noxious organisms. However, allyl isothiocyanate can not be used as it is because of its comparatively high volatility. Accordingly, it is necessary to control the volatilization rate of allyl isothiocyanate on use by setting the volatilization duration period of time of allyl isothiocyanate according to the purposes.

In light of these points, various products have been suggested. For example, there is suggested a synthetic resin film having a bactericidal action, in which allyl isothiocyanate is adsorbed on a synthetic resin film and a trace amount of vapor of allyl isothiocyanate is released from the surface thereof (Japanese patent Publication No. Hei 3-151972(A)). It is also suggested that an adsorbent is contained in a polymer molded object such as film and allyl isothiocyanate is adsorbed in the adsorbent and, furthermore, vapor of allyl isothiocyanate is released from the surface of the polymer molded object, thereby exerting an antibacterial action (Japanese Patent Publication No. Hei 3-2235(A)).

However, when using allyl isothiocyanate as a repellent, an antimicrobial and antifungal drug, etc. for noxious organisms, there is a problem that the effect does not remain in case where allyl isothiocyanate is adsorbed on the film. As a result of solution of this problem, a resin molded object is disclosed in Japanese Patent Publication No. Hei 9-151317(A). This molded object can contain a large amount of allyl isothiocyanate as an active ingredient so that the durability can be expected to some degree.

However, since this molded object is a rigidly hardened article, when allyl isothiocyanate in the vicinity of the surface is volatilized with a lapse of time, hardening of the surface proceeds and allyl isothiocyanate contained in the interior of the molded object can not transfer to the surface. Therefore, the volatilization amount of allyl isothiocyanate is lowered within about one month at most and the durability is not enough to use as a repellent, an antimicrobial and antifungal drug, etc. Moreover, The shape of the resulting molded object is not easy to deform and work, thus causing a problem about handling on manufacturing of the product.

The present invention has been made to solve the above problems of the prior art and an object of the present invention is to provide a gel-like resin molded object composition, which exerts a repellent action to noxious organisms and an antimicrobial and antifungal action for a long period of time.

In case where the volatile drug is gelled by using a gelling drug, it is made possible to transfer the active ingredient to the surface of the molded object with a lapse of time and to improve the handling. However, since the gelled resin molded object composition described above contains a comparatively large amount of a volatile drug, the volatilization rate of the drug is too large sometimes. Accordingly, it becomes necessary to control the volatilization rate of allyl isothiocyanate by containing the gel-like resin molded object composition in a packaging material through which a volatile gas of the volatile drug can permeate.

Accordingly, another object of the present invention is to provide a volatile gel-like packaged drug comprising a gel-like resin molded object composition and a container, the gel-like resin molded object composition being contained in container to control the volatilization rate of the drug.

In case of preparing the volatile gel-like packaged drug comprising a gel-like resin molded object composition and a container, the gel-like resin molded object composition being contained in container to control the volatilization rate of the drug, gelling of the volatile drug requires a certain degree of time. Therefore, it requires a comparatively long period of time and much labor to package after forming into a gel having a predetermined shape.

Also the present invention has been made to solve such a problem and another object of the present invention is to provide a volatile gel-like packaged drug which can be packaged without waiting for gelling, and a method of preparing the same.

In case where the volatilization rate of the volatile drug other than allyl isothiocyanate must be controlled, a molded object must be formed by using a resin. Also in this case, the durability of the volatilization of the volatile drug for a long period was poor.

Also the present invention has been made to solve such a problem and a still another object of the present invention is to provide a gel-like resin molded object composition capable of continuously volatilizing the volatile drug for a long period of time.

### Disclosure of the Invention

The gel-like resin molded object of the present invention is characterized by forming a resin molded object containing allyl isothiocyanate and a resin base into a gel. By forming the resin molded object containing allyl isothiocyanate into a gel, not a conventional cured article, it is made possible to transfer allyl isothiocyanate as the active ingredient to the surface of the molded object with a lapse of time, thereby lengthening the duration period of time when using as a repellent for noxious organisms.

In the above, the gel-like resin molded object preferably contains allyl isothiocyanate in the amount within a range of more than 20% by weight and not more than 85% by weight based on the total weight. When the content of allyl isothiocyanate is-within the range described above, gelling easily occurs, thereby making it possible to lengthen the duration period of time when using as a repellent for noxious organisms.

The gel-like resin molded object of the present invention can be used as a repellent composition because it has long volatilization duration period of time of allyl isothiocyanate.

The gel-like resin molded object of the present invention can also be used as an antimicrobial and antifungal drug because it has long volatilization duration period of time of allyl isothiocyanate.

Drugs such as allyl isothiocyanate are preferably used as a volatile gel-like packaged drug contained in a container to control the volatilization rate because almost all of them have comparatively high volatility. Whereby it is made possible to control the volatilization rate and to secure the volatility for a long period of time, thus making it easy to control the volatilization duration period of time of the repellent and antimicrobial and antifungal drug.

In the present specification, the volatile gel-like packaged drug include both of a drug contained in a container after gelling the gel-like resin molded object composition and a drug gelled after filling a container with a gel-like resin molded object composition before gelling. The volatile gel-like packaged drug in the present specification is referred to as a "gel-like repellent in a container" when using for repellent purposes, while it is referred to as a "gel-like antimicrobial and antifungal drug" when using for antimicrobial and antifungal purposes.

The method of the present invention is a method of preparing a volatile gel-like packaged drug in which a gel-like resin molded object composition containing a volatile drug and a gel base is contained in a container partly comprising at least a packaging material through which a volatile gas of said volatile drug can permeate, said gel-like resin molded object composition being contained in said container, said method comprises: preparing a drug mixture containing a volatile drug and a gelling drug; filling said container with said drug mixture; and gelating said drug mixture thereby to form a gel-like resin molded object composition.

Filling of the container with the gelling drug before gelating makes it unnecessary to leave or cool until the gelating of the gelling drug is completed. For example, immediately after filling a container with the gelling drug and putting the container in a corrugated cardboard box, for example, the gelling drug can be galated in the box. Accordingly, it can be stored in a warehouse before gelating the gelling drug and the manufacturing process can be drastically reduced. In the resulting gel-like resin molded object composition, it becomes possible to transfer the volatile drug as the active ingredient to the surface with a lapse of time and to lengthen the volatilization duration period of time of the drug.

Allyl isothiocyanate contained in the gel-like resin molded object and volatile gel-like packaged drug has been known as a stimulant ingredient of green mustard, as described above. In the present invention, any of natural substances and chemically synthesized substances can be used. The content of allyl isothiocyanate is within a range of more than 20% by weight and not more than 85% by weight based on the total weight of the gel-like resin molded object. When the content is not more than 20% by weight, the resulting molded object composition becomes hard without being gelled and allyl isothiocyanate does not transfer from the interior of the molded object composition to the surface, thereby shortening the volatilization duration period of time of allyl isothiocyanate, which is not preferable. On the other hand, when the content of allyl isothiocyanate is more than 85% by weight, it becomes difficult for the resulting molded object composition to maintain the gel-like form, resulting in poor handling, which is not preferable.

In the present invention, any gelling drug can be used as far as it can swell or dissolve in a volatile drug at normal temperature. Specific examples thereof include polyurethane resin, polyacrylamide, polystyrene, polyamide, polyacrylate, and copolymers of two or more monomers thereof. When using allyl isothiocyanate, mentha oil and jasmine oil as the volatile drug, a polyurethane resin is preferable in view of the solubility and sustained release of these volatile drugs as well as ease of manufacturing.

In the present invention, the polyurethane resin can be preferably used as the resin base. The polyurethane resin suited for use as the gelling drug is obtained by using the following polyisocyanates as a raw material. Examples of the polyisocyanate are bifunctional isocyanates such as phenylene diisocyanate, tolylene diisocyanate, hexamethylene diisocyanate, diphenylmethane diisocyanate, naphthalene diisocyanate, xylylene diisocyanate, polymeric diphenylmethane diisocyanate, isophorone diisocyanate, tolidine diisocyanate, hydrogenated xylylene diisocyanate, hydrogenated diphenylmethane diisocyanate, lysine diisocyanate, tetramethylxylene diisocyanate, and trimethylhexamethylene diisocyanate; and trifunctional isocyanates such as 1,6,11-undecane triisocyanate, 1,8-diisocyanate-4-isocyanatemethyloctane, 1,3,6- hexamethylene triisocyanate, triphenylmethane triisocyanate, tris(isocyanatephenyl) thiophosphate, and lysine ester triisocyanate. It further includes adducts of the above bifunctional and trifunctional isocyanates and glycol, hexanetriol, trimethylolpropane, pentaerythritol, polyether polyol, and polyester polyol, and isocyanurate-modified compounds, buret-modified compounds and derivatives of bifunctional and trifunctional polyisocyanates. These polyisocyanates can be used alone or in combination. Among these polyisocyanates, hexamethylene diisocyanate, isophorone diisocyanate, tetramethylxylene diisocyanate, isocyanurate-modified compounds, buret-modified compounds and derivatives thereof, 1,3,6-hexamethylene triisocyanate, hydrogenated xylylene diisocyanate and hydrogenated diphenylmethane diisocyanate are preferably used because they do not cause yellowing as a result of the reaction with light and do not lower the commercial value.

Similarly, examples of the polyol as a raw material of the polyurethane resin include aliphatic polyols such as trimethylolpropane, hexanetriol, ethylene glycol, propylene glycol, and hexanediol; aromatic polyols such as xylylene glycol; polyhydric phenols such as hydroquinone and catechol; condensates of these polyhydric alcohols and alkylene oxide; and polyol prepolymers such as polyester polyol and polyether polyol. These polyols are used alone or in combination. There can also be used, as the polyol, castor oil; polyether polyols such as polyoxyalkylene polyol and polytetramethylene ether glycol; and polyester polyols such as condensed polyester polyol, lactone polyester diol and polycarbonate diol. These polyols can-be used alone or in combination. Among these polyols, castor oil is preferably used in view of the reactivity.

When using polyurethane as the resin base and using allyl isothiocyanate as the volatile drug, it depends on the kinds of polyisocyanates and polyols as well as an incorporation ratio of three ingredients, i.e. allyl isothiocyanate, polyisocyanate and polyol whether or not the resulting drug is in the form of a gel. Table 1 shows the results obtained by testing whether or not a good gel-like form is obtained by changing the incorporation ratio of the polyisocyanate (isocyanurate type hexamethylene diisocyanate) to the polyol (glyceryl triricinoleate) in case where the content of allyl isothiocyanate is controlled to 40% by weight based on the total weight of the gel-like resin molded object. Similarly, the test results in case where the content of allyl isothiocyanate is controlled to 60% by weight and 80% by weight based on the total weigh of the gel-like resin molded object are shown in Table 2 and Table 3, respectively.

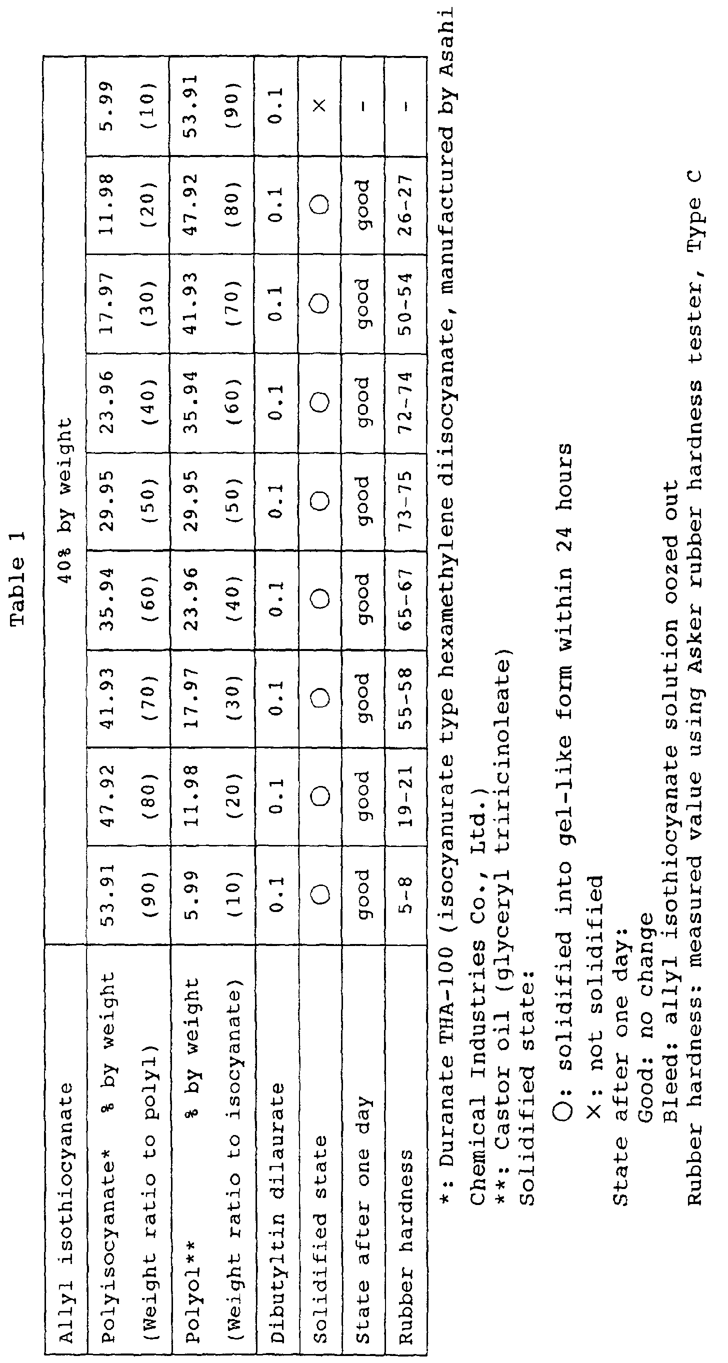

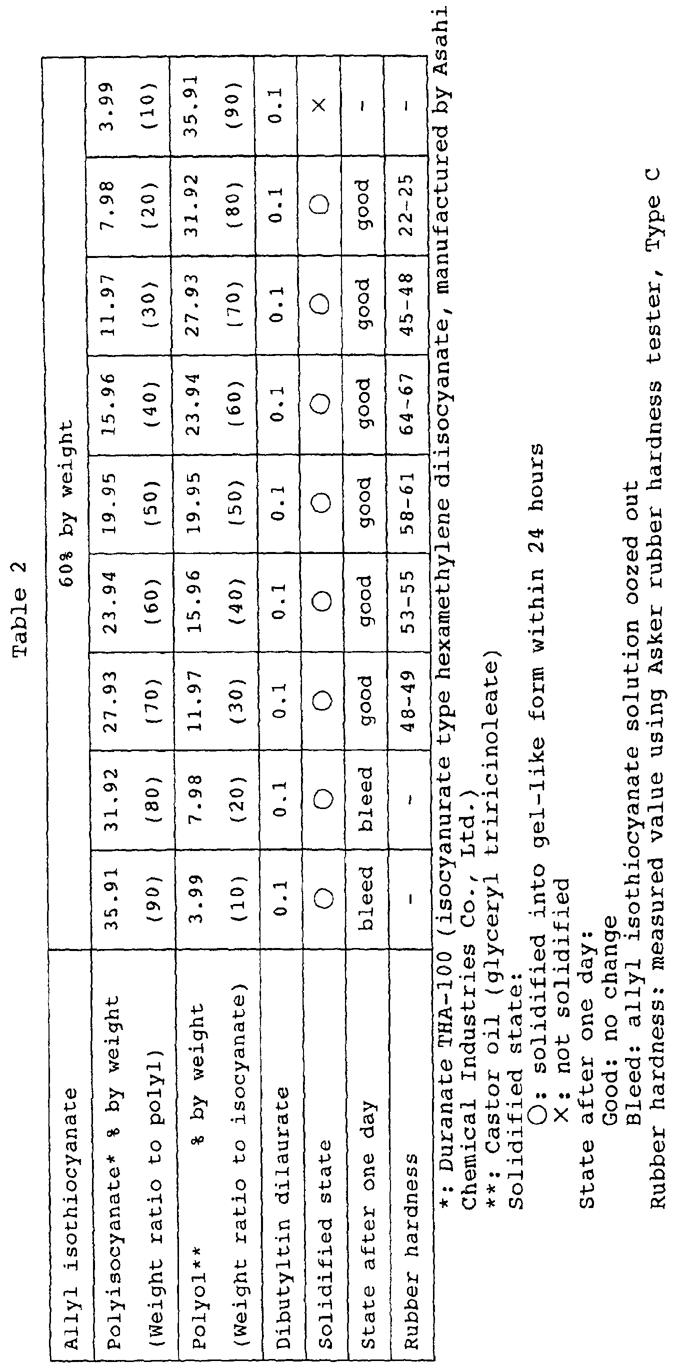

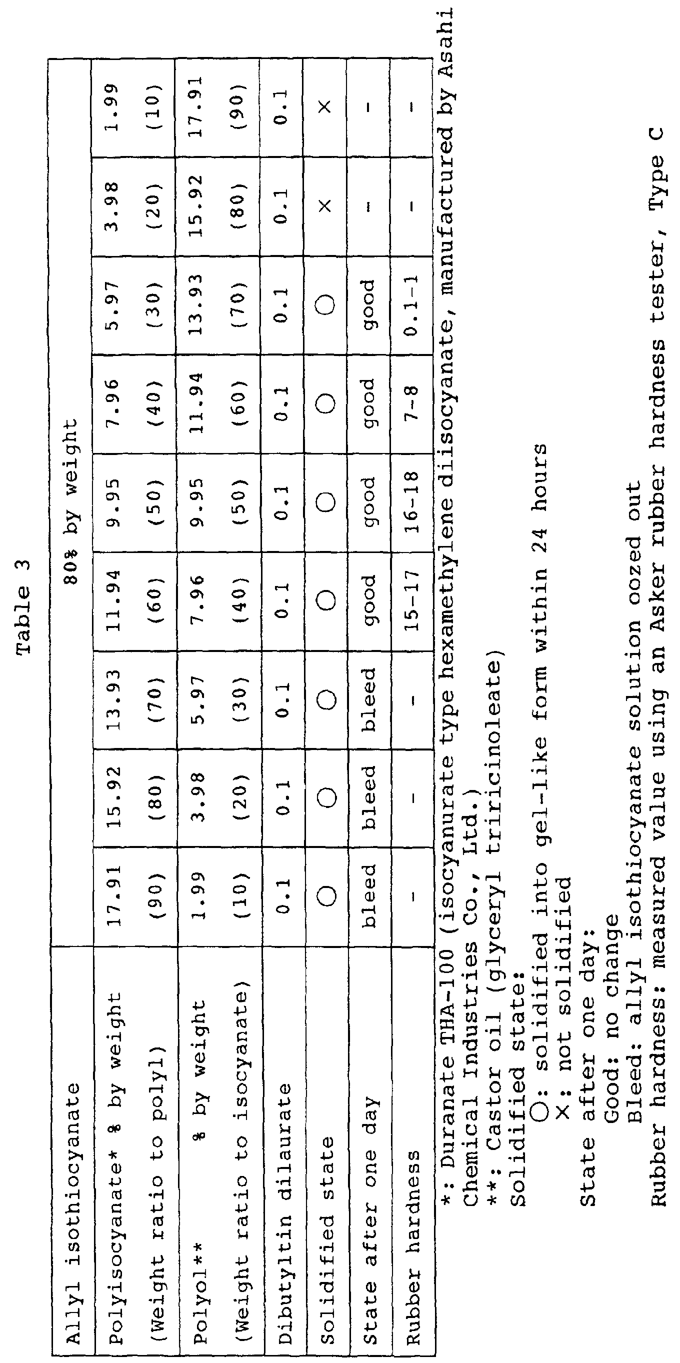

As is apparent from the results of Tables 1 to 3, gelling occurs regardless of the ratio of the polyisocyanate to the polyol in case where the content of allyl isothiocyanate is low, whereas, gelling occurs only in case where the ratio of the polyisocyanate to the polyol is close to 1:1 with the increase of the content of allyl isothiocyanate.

In the present invention, the resulting composition is in the form of a gel, as described above. Concretely, the composition preferably has a rubber strength within a range from 0.1 to 100, and more preferably within a range from 5 to 85. As used herein, the term "rubber strength" refers to a value measured by using an Asker rubber hardness tester, Type C. When the rubber strength is smaller than 0.1, the molded object composition is not formed into a gel, resulting in poor handling, which is not preferable. On the other hand, when the rubber strength is larger than 100, the molded object composition become hard so that allyl isothiocyanate does not transfer from the interior of the molded object to the surface and the volatility of allyl isothiocyanate is lowered, which is not preferable.

The gel-like resin molded object composition of the present invention can be used in various forms of bulk, sheet, film, particle, powder, or a coating formed on the surface of articles in various forms. Such a gel-like resin molded object composition can be used as a gel-like repellent composition or a gel-like antimicrobial and antifungal drug composition because it volatilizes allyl isothiocyanate for a long period of time. Such a gel-like resin molded object composition is preferably used as a volatile gel-like packaged drug contained in a container for controlling the volatilization rate.

The gel-like repellent composition and the gel-like repellent contained in a container can be used for noxious organisms. The noxious organisms includes cockroaches, weevils, termites, rats, moles, dogs, cats, deer, crows, bears, and pigeons.

The gel-like repellent composition and the gel-like repellent contained in a container of the present invention can be used in various places, for example, transport facilities such as freight car, ship, and aircraft, warehouse (especially cereal warehouse), greenhouse (including glass and vinyl houses), chest, closet, rice chest, dumping ground, plantation, garden, sandbox, electric wiring position, switchboard, and steel tower, including spaces adjacent to space of residence including underfloor and ceiling of architectural structures such as building and house. In these places, the gel-like repellent composition and the gel-like repellent contained in a container of the present invention can be disposed by various methods such as placing, mounting to the wall or ceiling, and hanging on the wall or ceiling.

The gel-like resin molded object composition of the present invention can be used as a gel-like antimicrobial and antifungal composition because it volatilizes allyl isothiocyanate for long period of time. The gel-like resin molded object composition of the present invention is preferably used as a gel-like antimicrobial and antifungal drug after being contained in a container for controlling the volatilization rate of allyl isothiocyanate. The volatilization rate of allyl isothiocyanate can be made nearly uniform by containing the gel-like resin molded object composition of the present invention in a container.

The gel-like antimicrobial and antifungal composition and the gel-like antimicrobial and antifungal drug contained in a container of the present invention can be used in various places, for example, refrigerators for domestic and business uses, electrical appliances such as cleaner, air conditioner, and ventilator, transport facilities such as freight car, ship, and aircraft, warehouse (especially cereal warehouse), greenhouse (including glass and vinyl houses), underfloor and ceiling of architectural structures such as building and house, shoe box, bath room, washstand, kitchen, and closet. In these places, the gel-like antimicrobial and antifungal composition and the gel-like antimicrobial and antifungal drug contained in a container of the present invention can be disposed by various methods such as put down as it stands, mounting to the wall or ceiling, and hanging on the wall or ceiling.

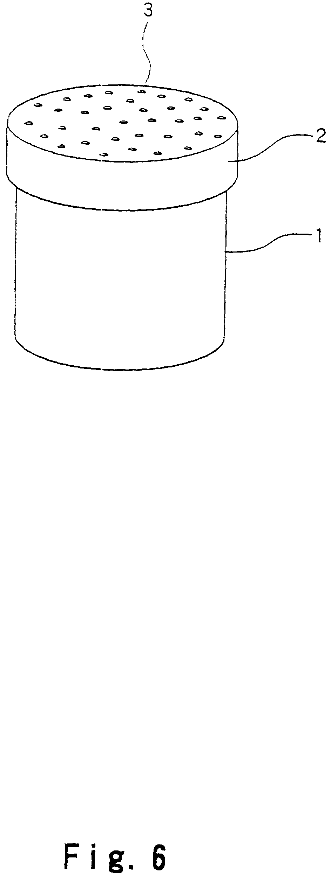

The container in which the gel-like resin molded object composition of the present invention is contained includes, for example, a container as shown in Fig. 6. This container comprises a container body 1 in which the gel-like resin molded object composition of the present invention is contained, a cap 2 which is removably attached to an opening portion of the container body, and a vent hole 3 with which the cap 2 is provided. According to this container, the volatilization rate of allyl isothiocyanate can be controlled by changing the size and number of the vent hole 3.

The container used in the present invention includes, for example, a bag comprising a thermoplastic resin film through which allyl isothiocyanate can permeate. Examples of such a film are polyethylene, polypropylene, ethylene-vinyl acetate, polyethylene terephthalate, polyvinyl chloride, nylon and polyacetal films, and laminated films thereof. In the present invention, there can be those prepared by laminating the above film with the other packaging material such as nonwoven fabric. A combination with the other packaging material makes it possible to reinforce the film and to print, resulting in improvement of the appearance of the product.

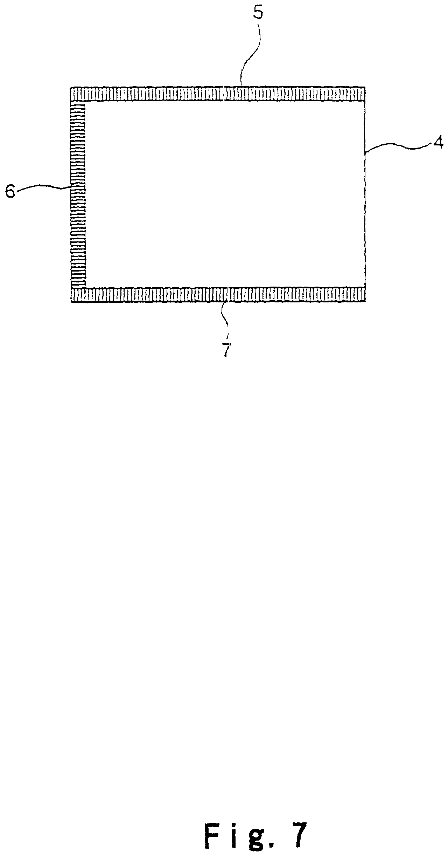

The packaging bag in the present invention includes, for example, those shown in Fig. 7. This packaging bag 4 is made of a laminated film prepared by laminating a film, through which allyl isothiocyanate can permeate, with a nonwoven fabric, and the gel-like resin molded object composition of the present invention is contained therein by sealing at three sealing positions 5, 6 and 7. According to this packaging film 4, the volatilization rate of allyl isothiocyanate can be controlled by changing the thickness and kinds of the allyl isothiocyanate-permeable film.

Furthermore, the container can further comprises an aluminum foil laminated with a gas-permeable packaging material on the outer surface. Such an aluminum foil makes it possible inhibit the volatilization of the volatile drug until the beginning of the use of volatile gel-like packaged drug.

The gel-like resin molded object composition of the present invention can be used alone, but can also be used in combination with known aromatics containing various perfumes and known deodorants for preventing bad smell.

The method of preparing the volatile gel-like packaged drug of the present invention can be applied to the case where the volatile gel-like packaged drug is in the form of a sheet. The sheet-like and gel-like packaged drug is widely used because of its non-bulky form. Such a sheet-like and gel-like packaged drug is obtained by filling the same bag-shaped container as that in Fig. 7 with a mixture containing a volatile drug and a gelling drug before gelating of the gelling drug. After filling the container with the drug and gelling drug, these bag-shaped containers can be stored in the state of being laid one upon another and the manufacturing process can be drastically shortened.

The polyurethane resin used as the gelling drug in the present invention can also be used to gelate the volatile drug other than allyl isothiocyanate. Specific examples thereof include repellents, insect repellents, germicides, insecticides, antimicrobials, and pesticides.

The repellent and insect repellent include, for example, various synthetic chemical substances, in addition to vegetable oil, natural perfume, and synthetic perfume. Specific examples of the vegetable oil are Japanese cypress oil, hiba oil(*Thujopsis dolabrata* oil), alpina speciosae semn oil, citrus oil, ginger oil, cedar oil, red paper oil, and mustard oil, in addition to allyl isothiocyanate. Specific examples of the natural perfume and synthetic perfume are bouquet oil, rose oil, green floral oil, eucalyptus oil, lavender oil, jasmine oil, lemon oil, and mentha oil. Specific examples of the synthetic chemical substance are methyl salicylate, diethyltoluamide, dimethyl phthalate, denatonium benzoate, phenethyl alclohol, bis(2-chloro-1-methylethyl)ether, naphthalene, C₁₋₈ dialkyl phthalate, and 2-(4-ethoxyphenyl)-2-methylpropyl 3-phenoxy ether.

Specific examples of the germicide and insecticide are dimethyl-2,2-dichlorovinyl phosphate (DDVP), pyrethrin, parathion, chlorodimethylphenol, and bromomethylbenzaldehyde, in addition to allyl isothiocyanate.

Specific examples of the antimicrobial are eucalyptus oil, hiba oil, hinokitiol, linanool, limonene, diethyltoluamide, mentha oil, and mugwort oil, in addition to allyl isothiocyanate.

Specific example of the pesticide are those used for insecticide and fungicide, such as diemthyl-2,2-dichlorovinyl phosphate (DDVP), o,o-dimethyl-o-(3-methyl-4-nitrophenyl) thiophosphate, dimethyldicarbethoxyethyl dithiphosphate, 2-(4-ethoxydiphenyl)-2-methylpropyl 3-phenoxybenzyl ether, and bis(dimethylthiocarbamoyl) disulfide. Examples of these used as the herbicide are S-(2-chlorobenzyl) N,N-diethyl thiocarbamate and S-benzyl 1,2-dimethyl propyl(ethyl)thiocarbamate. Examples of the fumigant are methyl isothiocyanate, methyl bromide, and chloropicrin. Examples of the attractant are turpentine oil and pinene oil.

When using mentha oil or jasmine oil as the volatile drug, mentha oil or jasmine oil is preferably contained in the amount within a range of more than 20% by weight and not more than 40% by weight. When the amount is not more than 20% by weight, the volatilization amount of mentha oil or jasmine oil is small and the volatilization duration period of time is shortened, which is not preferable. On the other hand, when the amount is more than 40% by weight, the resulting composition is not in the form of a gel, which is not preferable.

When using polyurethane as the resin base, it depends on the kinds of polyisocyanates and polyols as the raw material as well as an incorporation ratio of three ingredients, i.e. volatile drug, polyisocyanate and polyol whether or not the resulting drug is in the form of a gel. Tables 4 to 8 show the results of the test which examines whether or not a good gel-like form is obtained when mentha oil is used as the volatile drug and the incorporation ratio of polyisocyanate (isocyanurate type hexamethylene diisocyanate) to polyol (glyceryl triricinoleate) is changed. Tables 4 to 8 show the test results in case where the content of mentha oil is controlled to 5, 10, 20, 40 or 60% by weight relative to the total weight of the resulting gel-like resin molded object.

As is apparent from the results of Tables 4 to 8, gelling occurs regardless of the ratio of the polyisocyanate to the polyol in case where the content of mentha oil is low, whereas, gelling occurs only in case where the weight ratio of the polyisocyanate to the polyol is close to 80:20 with the increase of the content of allyl isothiocyanate.

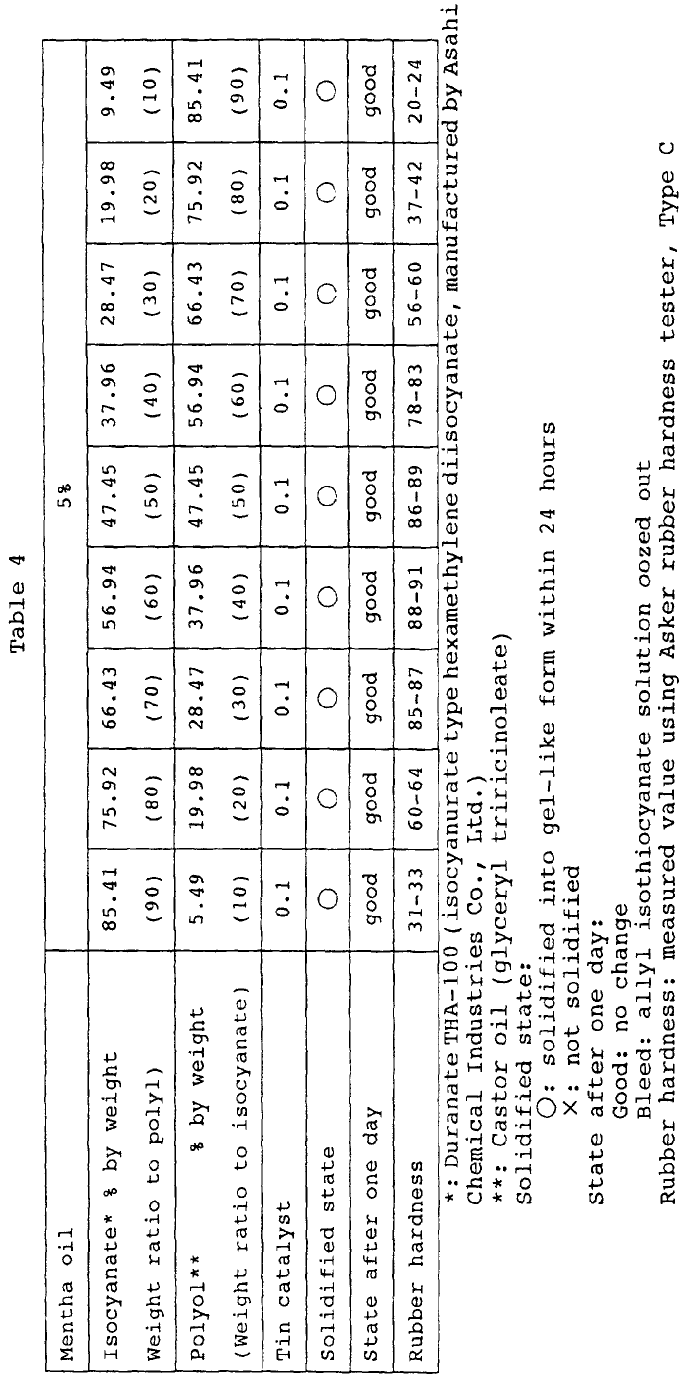

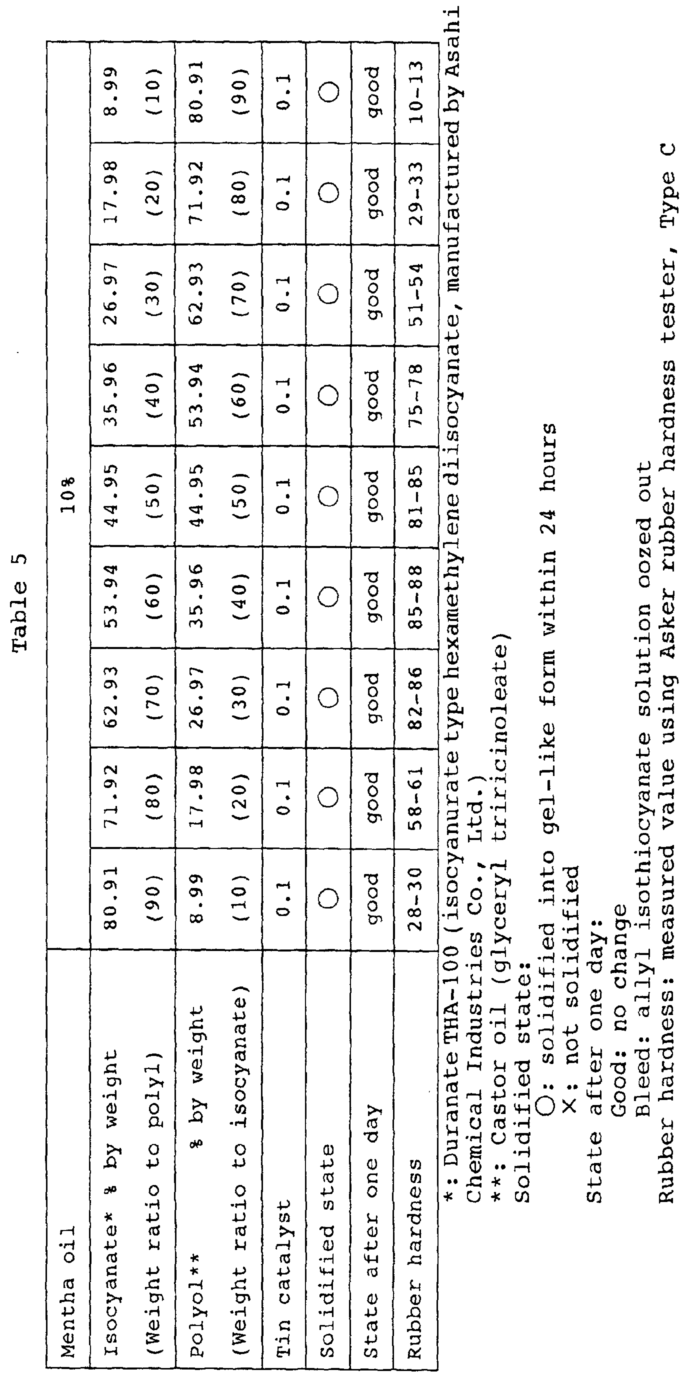

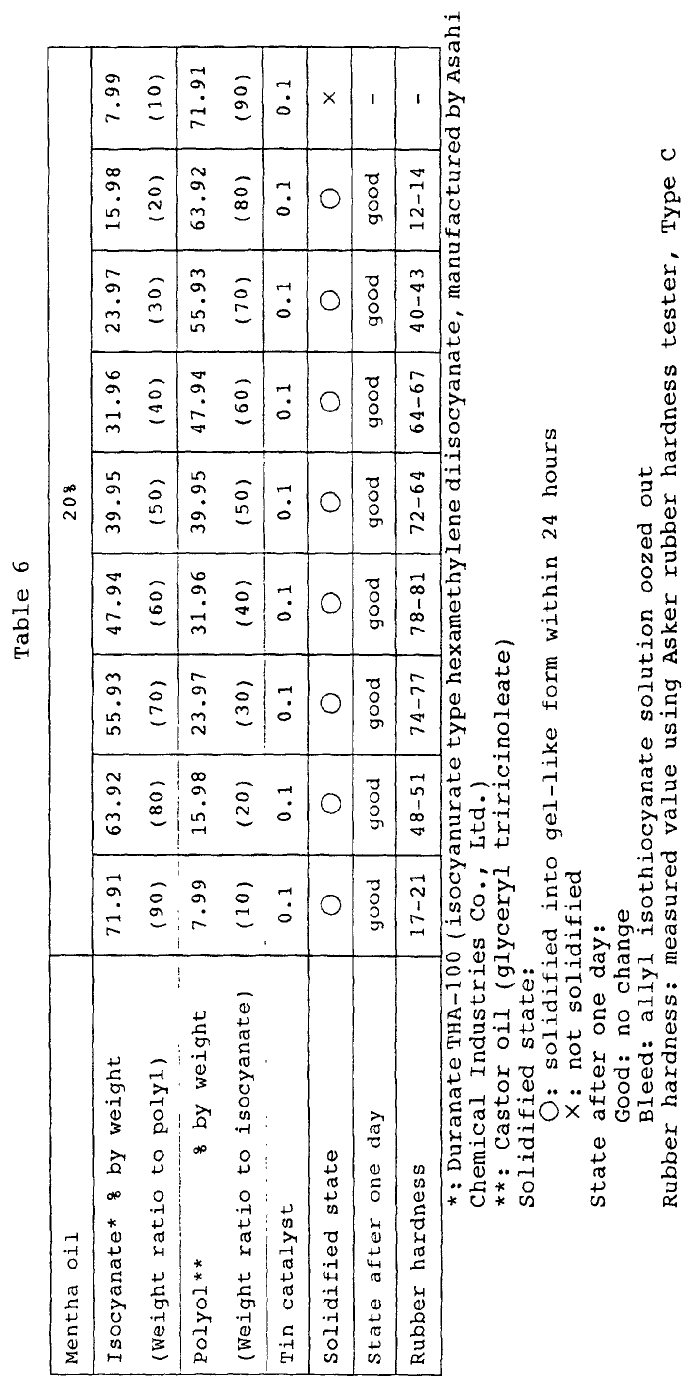

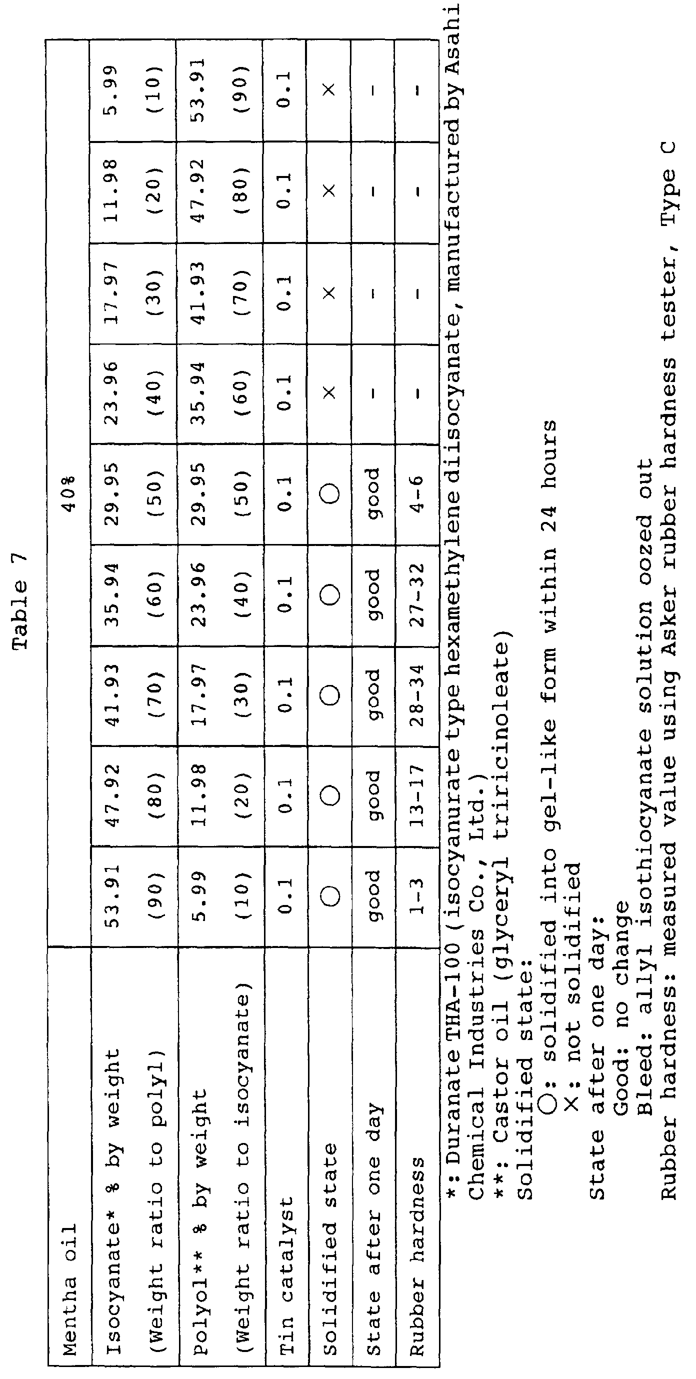

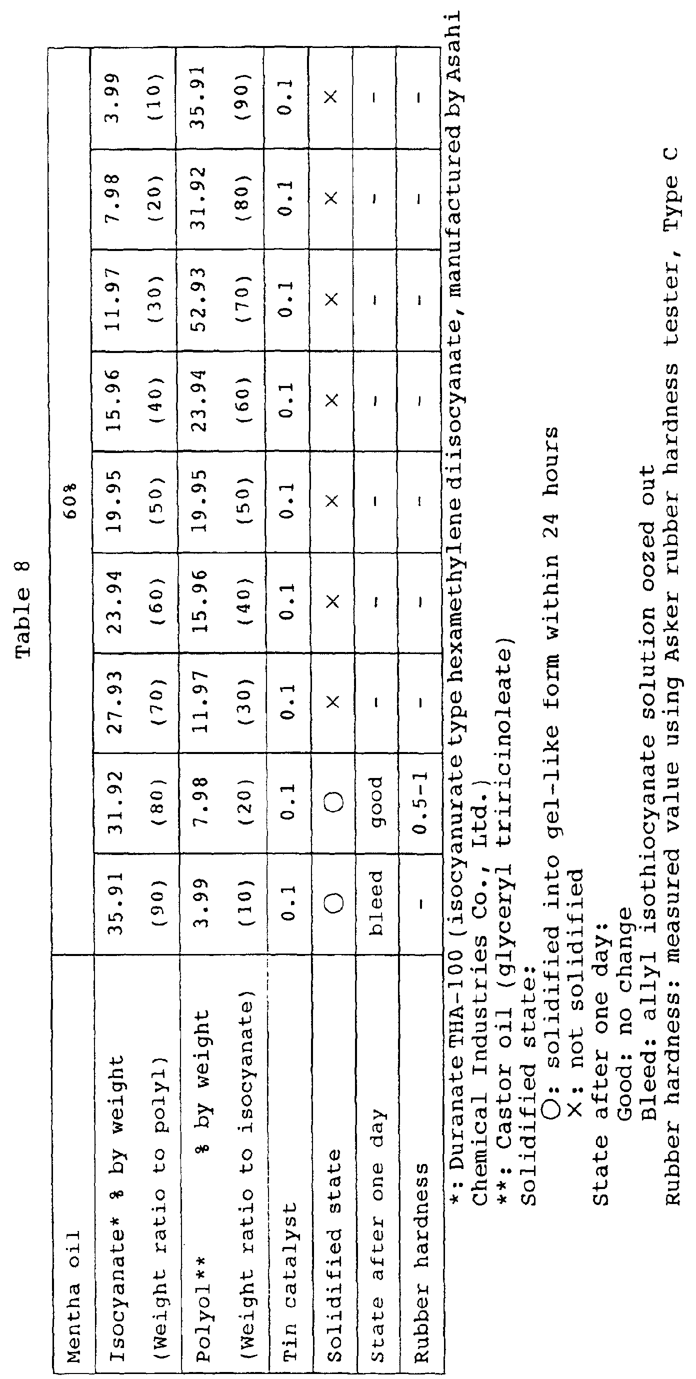

Similarly, Tables 9 to 15 show the results of the test which examines whether or not a good gel-like form is obtained when jasmine oil is used as the volatile drug and the incorporation ratio of polyisocyanate (isocyanurate type hexamethylene diisocyanate) to polyol (glycerin triricinoleate) is changed. Tables 9 to 15 show the test results in case where the content of jasmine oil is controlled to 5, 10, 20, 40 or 60% by weight relative to the total weight of the resulting gel-like resin molded object.

As is apparent from the results of Tables 9 to 15, gelling occurs regardless of the ratio of the polyisocyanate to the polyol in case where the content of jasmine oil is low, whereas, gelling occurs only in case where the weight ratio of the polyisocyanate to the polyol is close to 80:20 with the increase of the content of allyl isothiocyanate.

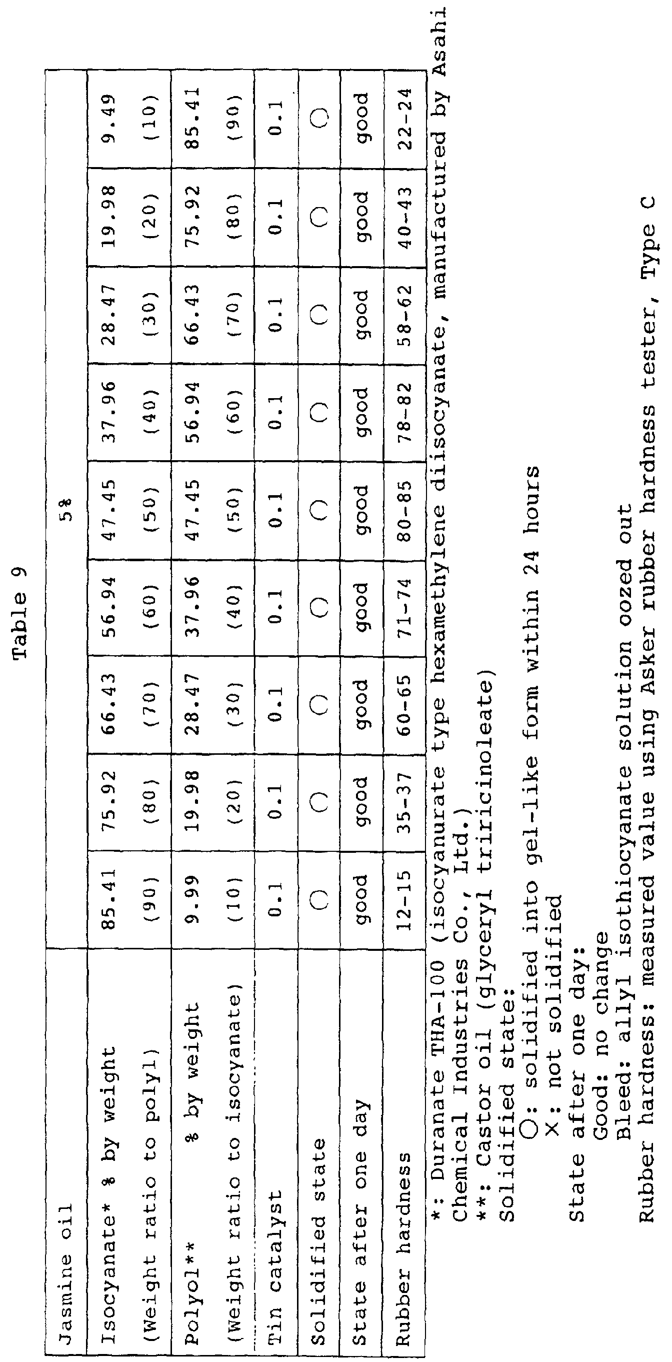

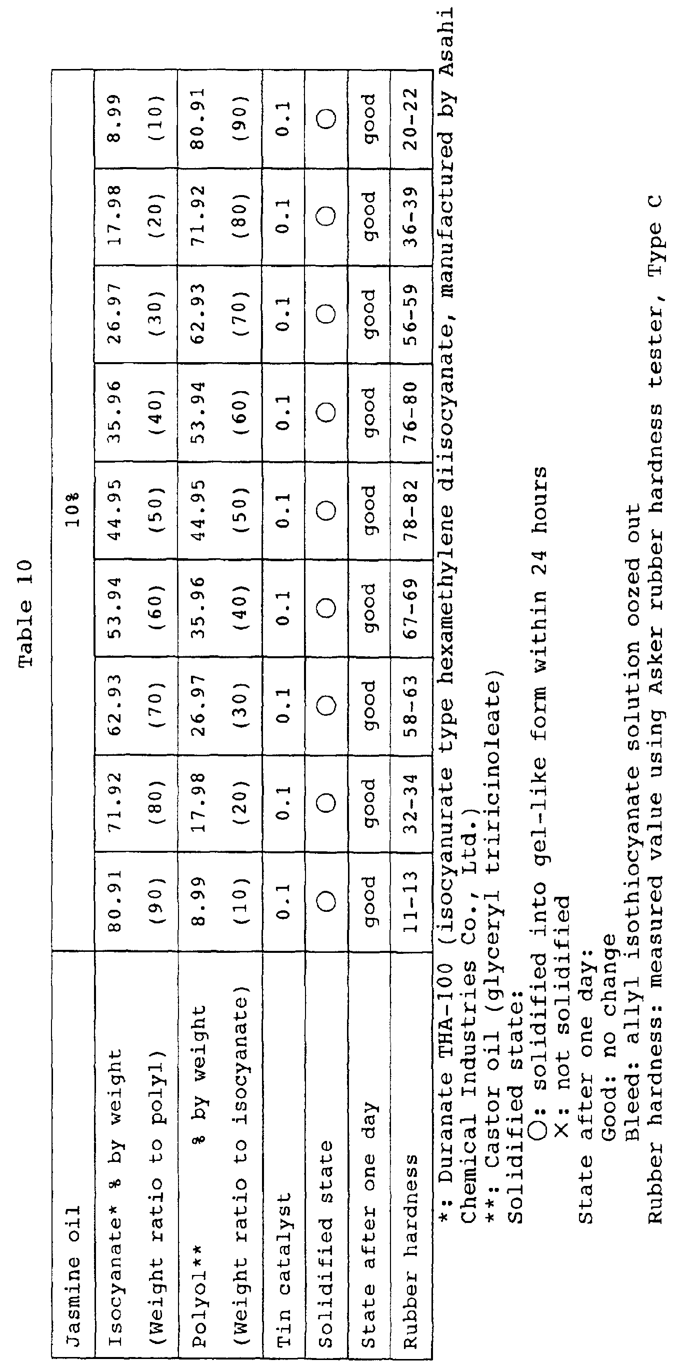

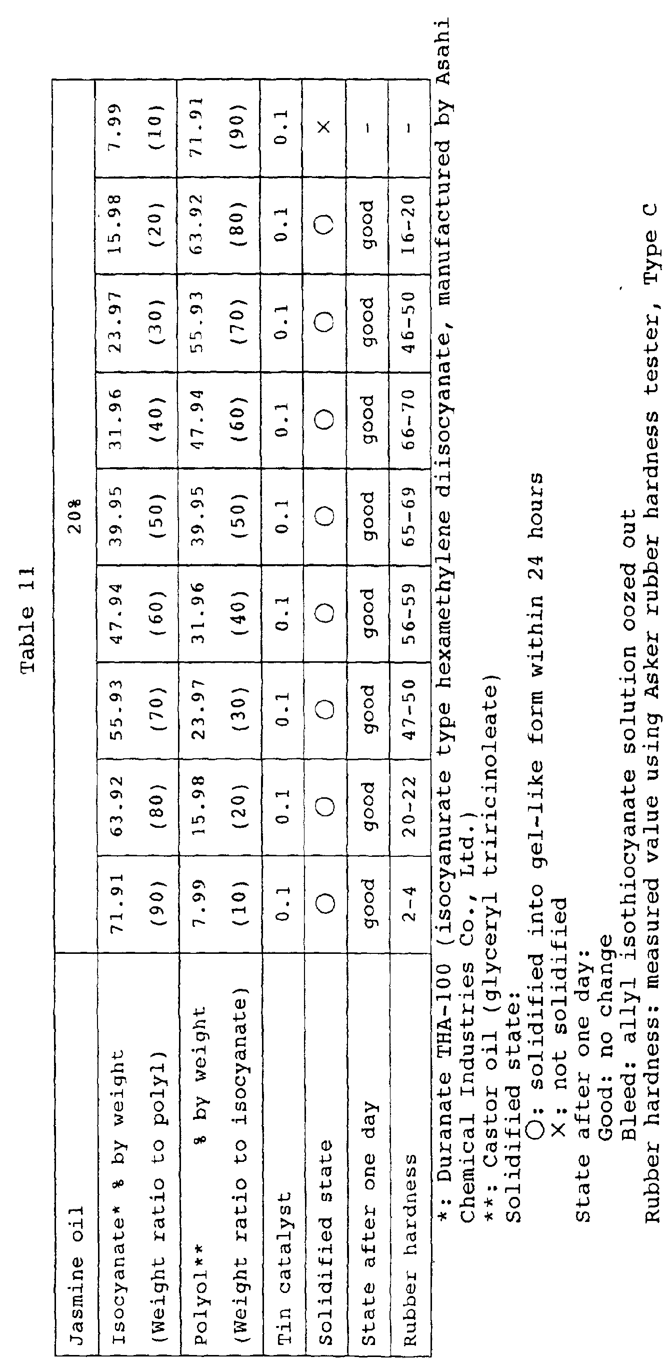

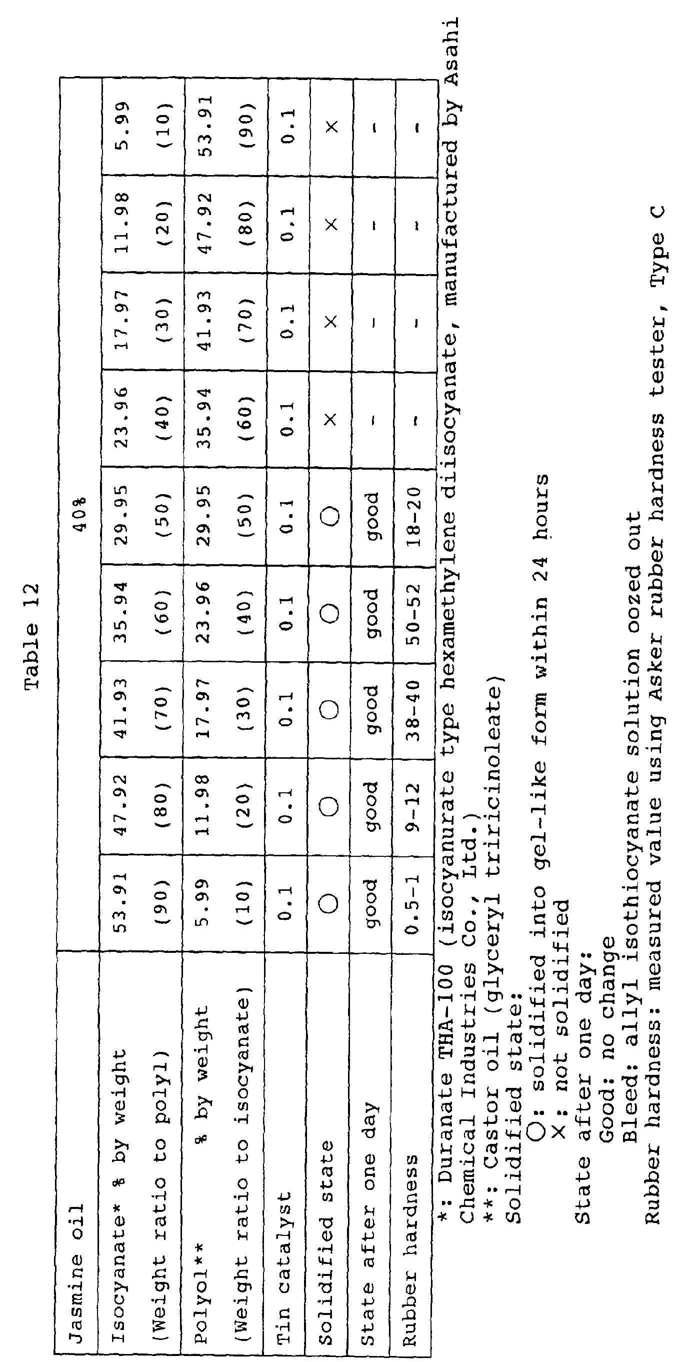

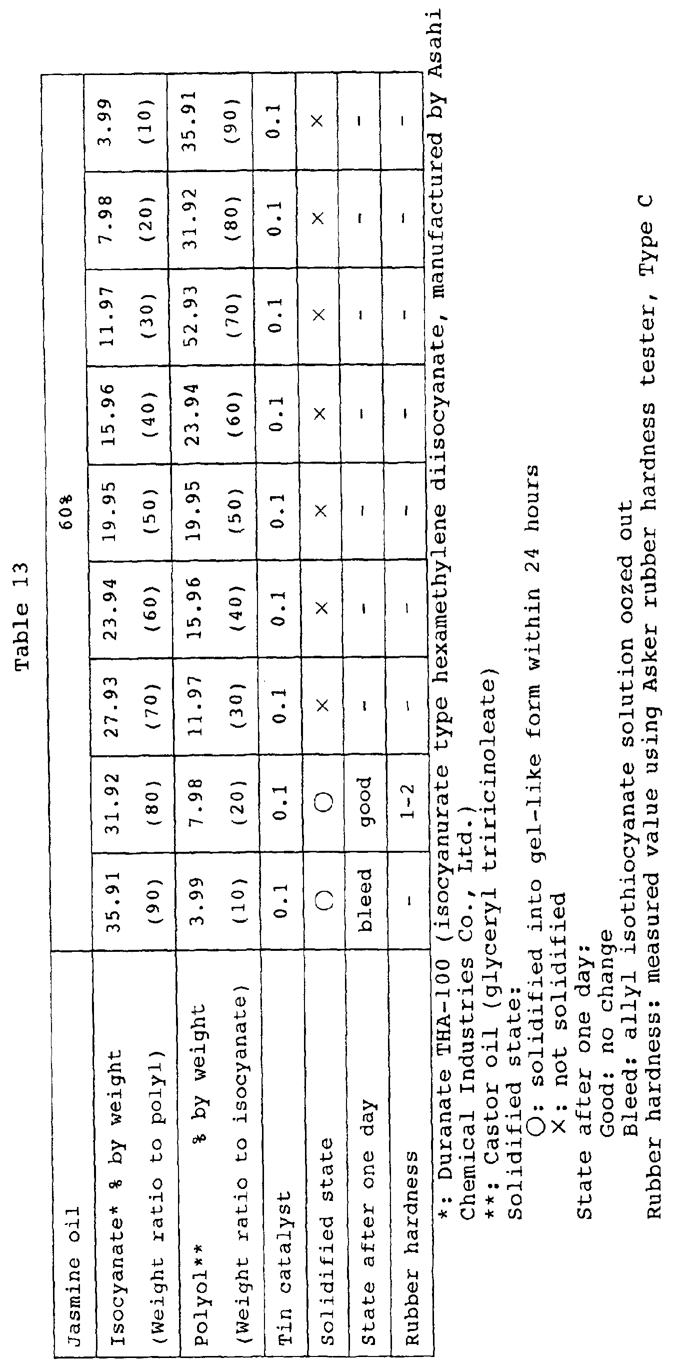

Concretely, the composition of the present invention prepared by gelling the volatile drug using polyurethane as a gelling agent preferably has a rubber strength measured by using an Asker rubber hardness tester Type C, within a range from 0.1 to 100, and more preferably from 5 to 85. Similar to the above case, when the rubber strength is smaller than 0.1, the resulting molded object composition is not formed into a gel, resulting in poor handling, which is not preferable. On the other hand, when the rubber strength is larger than 100, the molded object composition becomes hard and allyl isothiocyanate does not transfer from the interior of the molded object to the surface, thereby lowering the volatility of allyl isothiocyanate, which is not preferable.

The gel-like resin molded object composition prepared by gelling the volatile drug of the present invention using polyurethane as a gelling drug can be used in various forms of bulk, sheet, film, particle, powder, or a coating formed on the surface of articles in various forms. Such a gel-like resin molded object composition can be used for various purposes because it volatilizes the volatile drug for a long period of time.

### Brief Description of the Drawings

Fig. 1 is a graph showing the results of a volatilization test of a gel-like repellent contained in a container of a styrol container which contains a gel-like repellent composition including an allyl isothiocyanate content of 25%.
Fig. 2 is a graph showing the results of a volatilization test of a gel-like repellent contained in a container of a styrol container which contains a gel-like repellent composition including an allyl isothiocyanate content of 40%.
Fig. 3 is a graph showing the results of a volatilization test of a gel-like repellent contained in a container of a styrol container which contains a gel-like repellent composition having an allyl isothiocyanate content of 60%.
Fig. 4 is a graph showing the results of a volatilization test of a gel-like repellent contained in a container of a styrol container which contains a gel-like repellent composition including an allyl isothiocyanate content of 80%.
Fig. 5 is a graph showing the results of a volatilization test using a gel-like molded object sheet.
Fig. 6 is a schematic view showing an example of a container containing a gel-like molded object composition.
Fig. 7 is a schematic view showing an example of a packaging bag containing a gel-like molded object composition.
Fig. 8 is a schematic view showing the arrangement of chambers A to B and T for carrying out a repellence test.
Fig. 9 is a graph showing the results of a volatilization test of mentha oil using a gel-like molded object contained in a styrol container.
Fig. 10 is a graph showing the results of a volatilization test of mentha oil using a gel-like molded object sheet.
Fig. 11 is a graph showing the results of a volatilization test of jasmine oil using a gel-like molded object contained in a styrol container.
Fig. 12 is a graph showing the results of a volatilization test of jasmine oil using a gel-like molded object sheet.

### Best Mode for Carrying out the Invention

### (Examples 1 to 4)

In accordance with each formulation shown in the column of Examples 1 to 4 of Table 14, ingredients were mixed and dissolved in the order from the upper column of the same table. Finally, dibutyltin dilaurate was added and mixed and a styrol container (having an inner diameter of 35 mm and a height of 35 mm) was filled with 15 g of the mixture, and then left to stand at room temperature. After two hours have passed since the filling, gel-like molded objects with no fluidity were obtained, thereby gel-like repellents contained in a container of Examples 1 to 4 were obtained.

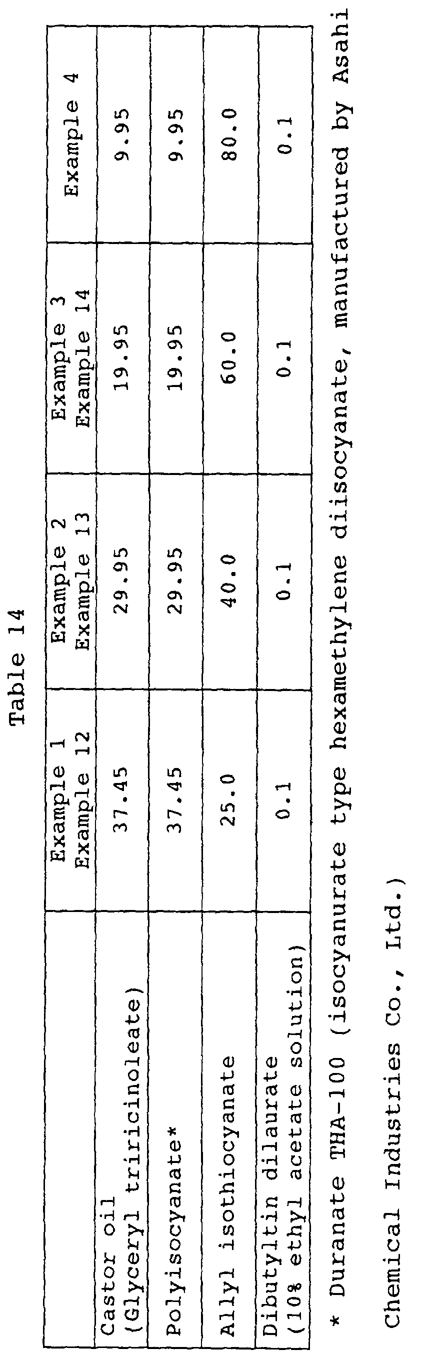

### (Examples 5 to 8)

In accordance with each formulation shown in the column of Examples 1 to 4 of Table 14, ingredients were mixed and dissolved in the order from the upper column of the same table in the same procedure as in Examples 1 to 4. Finally, dibutyltin dilaurate was added and mixed, and then 25 g of the mixture was poured into an aluminum mold of 10 cm × 5 cm in size and left to stand at room temperature in the horizontal position. After two hours have passed since leaving to stand, gel-like molded object sheets having a thickness of 0.5 cm with no fluidity were obtained.

### (Examples 9 to 11)

The sheets obtained in Example 6 (content of allyl isothiocyanate: 40%) were respectively put in an aluminum bag laminated with polyethylene on the inner surface, one surface of which is provided with three openings having a diameter of 1 cm (6 cm × 6 cm in size), a polypropylene bag (6 cm × 6 cm in size) and a polyethylene bag (6 cm × 6 cm in size) to obtain gel-like repellents contained in a container of Examples 9 to 11, respectively.

### <Volatility test>

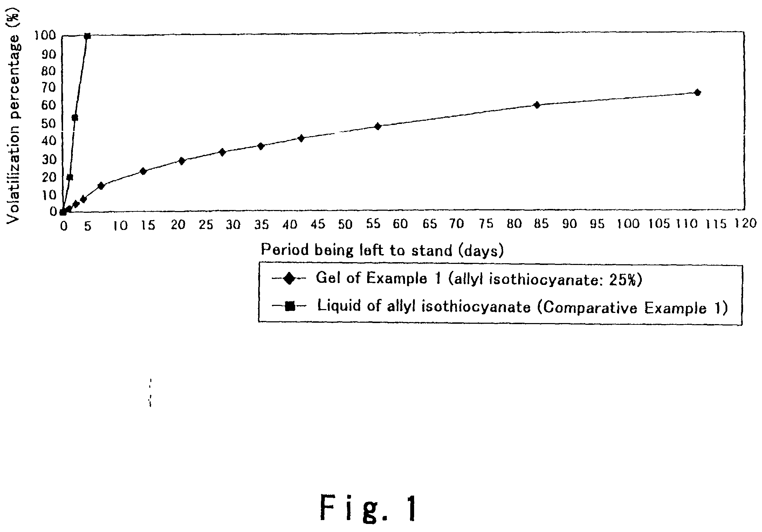

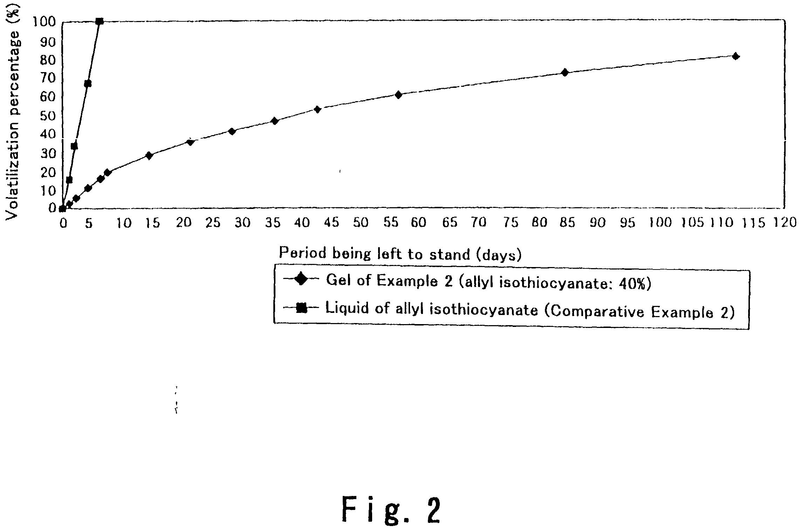

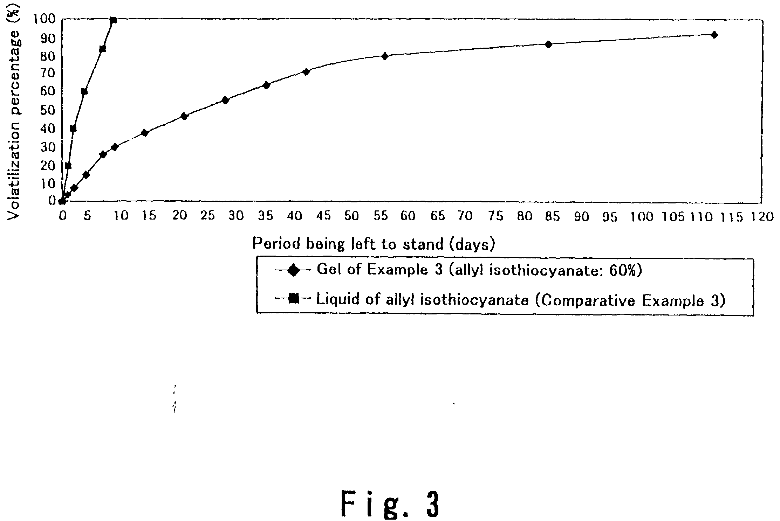

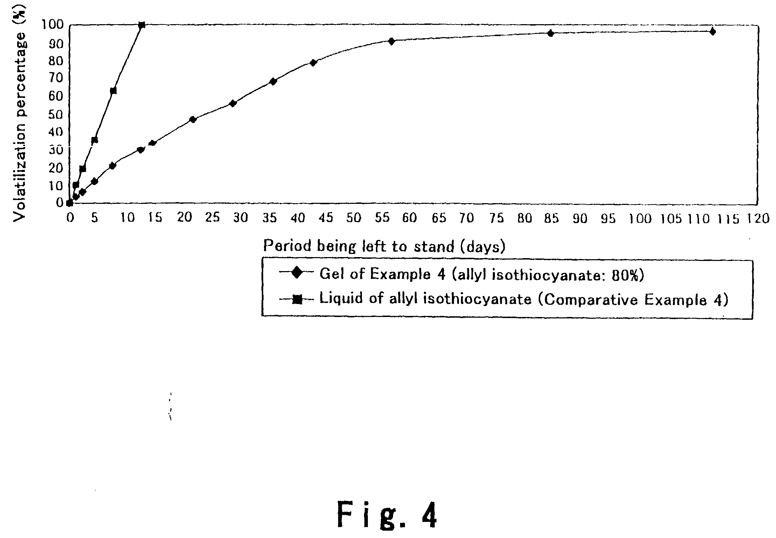

Using the gel-like molded objects contained in a styrol container of Examples 1 to 4, a volatility test of allyl isothiocyanate was performed. The results are shown in Figs. 1 to 4. The volatilization rate was represented by a weight loss (% by weight). For comparison, allyl isothiocyanate was charged in the same container as that used in Examples 1 to 4 as it is in the state of liquid, and then the volatilization test was performed simultaneously with the volatilization test of the gel-like molded object (Comparative Examples 1 to 4). The weight of liquid allyl isothiocyanate in Comparative Examples 1 to 4 is the same as that of allyl isothiocyanate contained in the corresponding gels of Examples 1 to 4.

As is apparent from Figs. 1 to 4, the volatilization rate of allyl isothiocyanate can be controlled by gelling allyl isothiocyanate. The total amount of any liquid allyl isothiocyanate is volatilized within 15 days, whereas, the duration period of time of two to three months or more is attained by gelling.

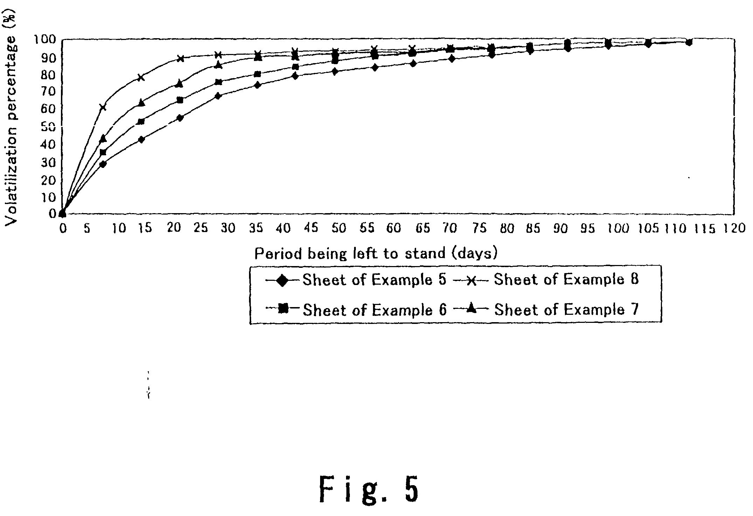

Using the gel-like molded object sheets of Examples 5 to 8, the volatilization test was performed. The results are shown in Fig. 5. As is apparent from Fig. 5, the volatilization rate of allyl isothiocyanate can be controlled by gelling allyl isothiocyanate.

### <Repellence test>

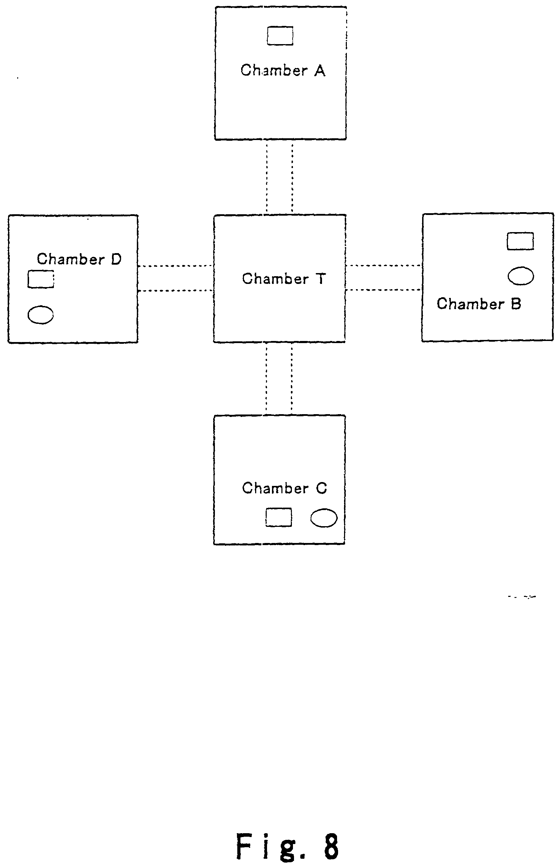

Using the respective gel-like repellents of Examples 1 to 4, Examples 5 to 8 and Comparative Examples 9 to 11, a repellence test of black rats was performed. As shown in Fig. 8, a center chamber T made of an acrylic plate was prepared and chambers A, B, C and D, which is also made of the same acrylic plate, were prepared around the chamber T. The center chamber T was connected with the respective chambers A, B, C and D through a passage made of a wire netting, while each entrance of the chambers A, B, C and D is provided with a door through which black rats can go in and out. The center chamber T is employed as a space of residence, while the chambers A, B, C and D were employed as a feed place.

In the chamber A, only water and feed (solid feed, vegetable) were disposed. In the chamber B, water, feed (solid feed, vegetable) and the gel-like repellents contained in a container of Examples 1 to 4 were disposed. In the chamber C, water, feed (solid feed, vegetable) and the gel-like repellents of Examples 5 to 8 were disposed. In the chamber D, water, feed (solid feed, vegetable) and the gel-like repellent sheets contained in a packaging bag of Examples 9 to 11 were disposed. Samples of the respective repellents were used by controlling the weight so that the total amount of allyl isothiocyanate becomes 5 g, though they differ in shape.

After arranging the respective chambers as described above, five black rats were put into the center chamber T and the state of each black rat was observed for five days. The weight loss of water and feed was also checked. Samples of the gel-like repellents were maintained as they are and, after one month, water and feed were disposed again in the respective chambers A to D and new black rats were put into the chambers. The state of each black rat was observed for five days and the weight loss of water and feed was also checked. The repellent effect was evaluated by repeatedly performing this test every one month.

In the chamber B, the test was performed by using the repellents contained in a container of Examples 1 to 4, as described above. In case of the repellent (content of allyl isothiocyanate: 80%) of Example 4, the amount of feed began to be reduced after two months. In case of the repellent (content of allyl isothiocyanate: 60%) of Example 3, the amount of feed began to be reduced after four months. In case of the repellent (content of allyl isothiocyanate: 40%) of Example 2, the amount of feed began to be reduced after eight months. In case of the repellent (content of allyl isothiocyanate: 25%) of Example 1, the amount of feed began to be reduced after ten months. In case where the repellents of Examples 1 to 4 are provided with an inner cap with 20 openings of 1 mm in diameter, intake of feed was not recognized even after one year has passed.

In the chamber C, the test was performed by using the sheet-like repellents of Examples 5 to 8. In case of the sheet-like repellent (content of allyl isothiocyanate: 80%) of Example 8, the amount of feed began to be reduced after one month. In case of the sheet-like repellent (content of allyl isothiocyanate: 60%) of Example 7, the amount of feed began to be reduced after 1.5 months. In case of the sheet-like repellent (content of allyl isothiocyanate: 40%) of Example 6, the amount of feed began to be reduced after two months. In case of the sheet-like repellent (content of allyl isothiocyanate: 25%) of Example 5, the amount of feed began to be reduced after three months.

In the chamber D, any of the polyethylene-, polypropylene-and aluminum-packaged repellents (any content of allyl isothiocyanate: 40%) of Examples 9 to 11, the amount of feed began to be reduced after four months.

As is apparent from the above results, any of the repellents of Examples 1 to 11 exerts the repellent effect to black rat for a long period of time.

Although the repellent effect was examined to black rats as described above, it was confirmed that the gel-like molded object composition of the present invention also exerts the repellent effect to other noxious organisms such as cockroaches, weevils, termites, moles, dogs, cats, deer, crows, bears, and pigeons.

### (Examples 12 to 14)

In accordance with each formulation shown in Table 14, ingredients were mixed and dissolved in the order from the upper column of the same table. Then, dibutyltin dilaurate was added and mixed to prepare a drug mixture. A bag-shaped polypropylene container made of 4.5 cm × 4.5 cm in inner side was filled with 5 g of the drug mixture and then heat-sealed. After three hours have passed since leaving to stand in the horizontal position, sheet-like and volatile gel-like packaged drugs with no fluidity were obtained.

### (Examples 15 to 17)

A bag-shaped polypropylene container was filled with 5 g of each of the drug mixtures prepared in accordance with each formulation of Examples 12 to 14 (Table 14), and then put in an aluminum foil bag laminated with polyethylene on the inner surface prior to gelling. This bag was left to stand in the horizontal position and sheet-like and volatile gel-like packaged drugs with no fluidity were obtained after three hours from filling.

### (Examples 18 to 20)

In accordance with the same formulation as in Examples 12 to 14 (Table 14), drug mixtures were prepared. A bag-shaped container (4.5 cm × 4.5 cm in inner side) of an aluminum foil laminated with polyethylene on the inner surface was filled with 5 g of each drug mixture and then heat-sealed. This bag was left to stand in the horizontal position and sheet-like and volatile gel-like packaged drugs with no fluidity were obtained after three hours from filling.

### (Comparative Examples 5 to 7)

In accordance with the same formulation as in Examples 12 to 14 (Table 14), drug mixtures were prepared. 5 g of each drug mixture was poured into an aluminum mold of 4.5 cm × 4.5 cm in size and left to stand at room temperature in the horizontal position. After three hours have passed, sheet-like and gel-like resin molded object compositions with no fluidity were obtained.

### <Volatility test>

Using the volatile gel-like packaged drugs of Examples 12 to 14, the volatile gel-like packaged drugs (aluminum foil is peeled off) of Examples 15 to 17, the volatile gel-like packaged drugs (aluminum foil is peeled off) of Examples 18 to 20, and the sheet-like and gel-like packaged drugs of Comparative Examples 5 to 7, a volatilization test of allyl isothiocyanate was performed. As a result, almost all of allyl isothiocyanate was volatilized within 50 days in the gel-like resin molded object compositions, which are not contained in a container, of Comparative Examples 5 to 7, whereas, the duration period of time of allyl isothiocyanate was attained for three to four months or more in the volatile gel-like packaged drugs of Examples 12 to 20.

### (Examples 21 and 22)

In accordance with each formulation shown in Examples 21 and 22 of Table 15, ingredients were mixed and dissolved in the order from the upper column of the same table. Finally, dibutyltin dilaurate was added and mixed and a styrol container (having an inner diameter of 35 mm and a height of 35 mm) was filled with 15 g of the mixture, and then left to stand at room temperature. After two hours have passed since the filling, gel-like molded objects with no fluidity were obtained. Thus, gel-like repellents contained in a container of Examples 21 and 22 were prepared.

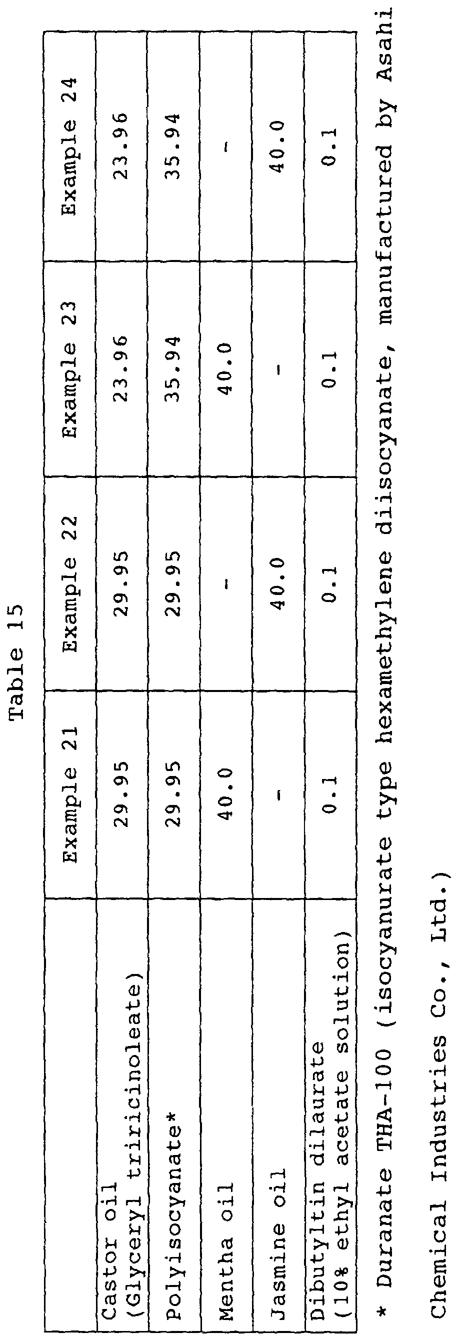

### (Examples 23 and 24)

In accordance with each formulation shown in the column of Examples 21 and 22 of Table 15, ingredients were mixed and dissolved in the order from the upper column of the same table in the same procedure as in Examples 21 and 22. Finally, dibutyltin dilaurate was added and mixed, and then 25 g of the mixture was poured into an aluminum mold of 10 cm × 5 cm in size and left to stand at room temperature in the horizontal position. After two hours have passed, gel-like molded object sheets having a thickness of 0.5 cm with no fluidity were obtained.

### Volatility test>

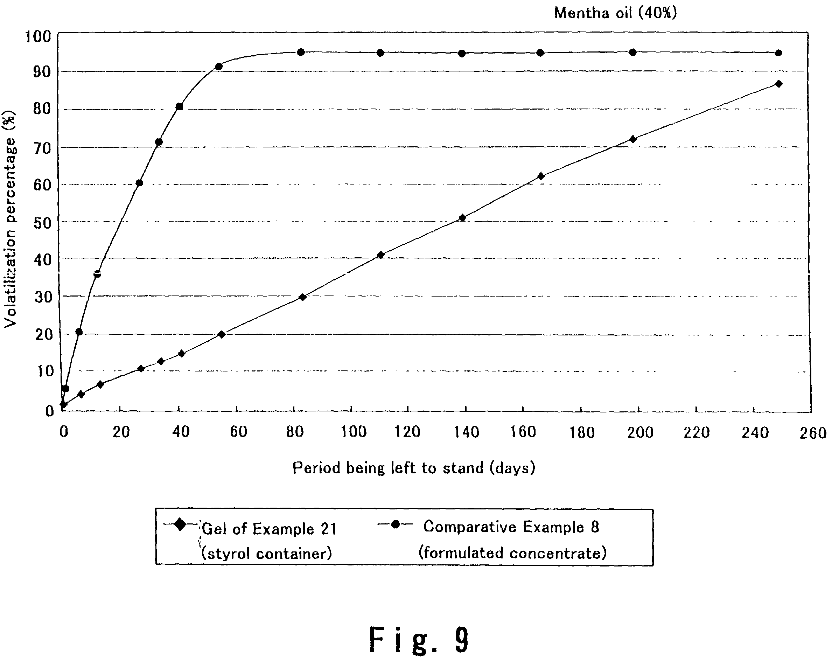

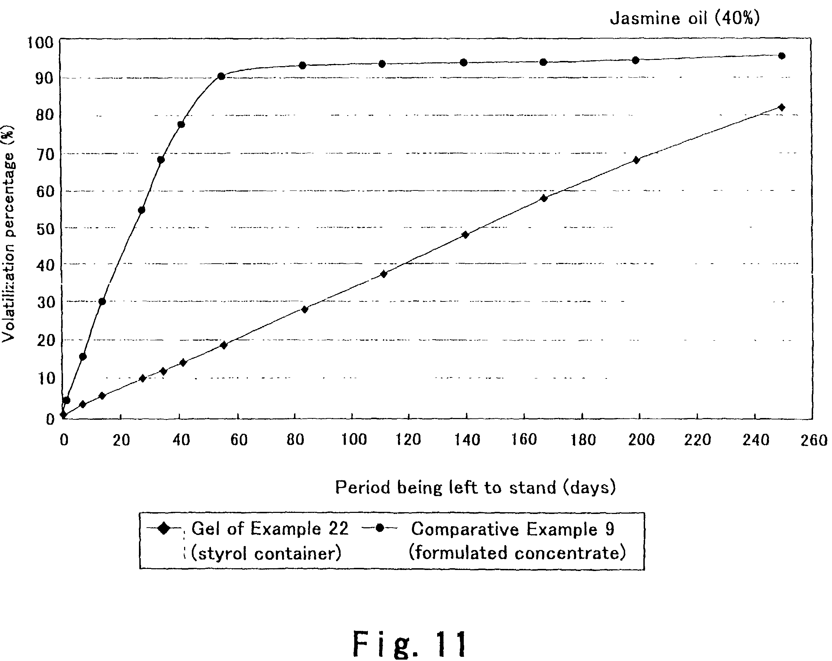

Using the gel-like molded objects contained in a styrol container of Examples 21 and 22, a volatilization test of mentha oil and jasmine oil was performed. The results are shown in Fig. 9 and Fig. 11. The volatilization rate was represented by a weight loss (% by weight) relative to an initial weight of a gel. For comparison, each of mentha oil and jasmine oil was charged in the same container as that used in Examples 21 and 22 as it is-in the state of liquid, and then the volatilization test was performed simultaneously with the volatilization test of the gel-like molded object (Comparative Examples 8 and 9). Each weight of mentha oil and jasmine oil in Comparative Examples 8 and 9 is the same as that of mentha oil and jasmine oil contained in the corresponding gels of Examples 21 and 22.

As is apparent from Fig. 9 and Fig. 11, the volatilization rate of mentha oil and jasmine oil can be controlled by gelling mentha oil and jasmine oil. The total amount of any of mentha oil and jasmine oil is volatilized within 60 days, whereas, the duration period of time of eight or more months is attained by gelling.

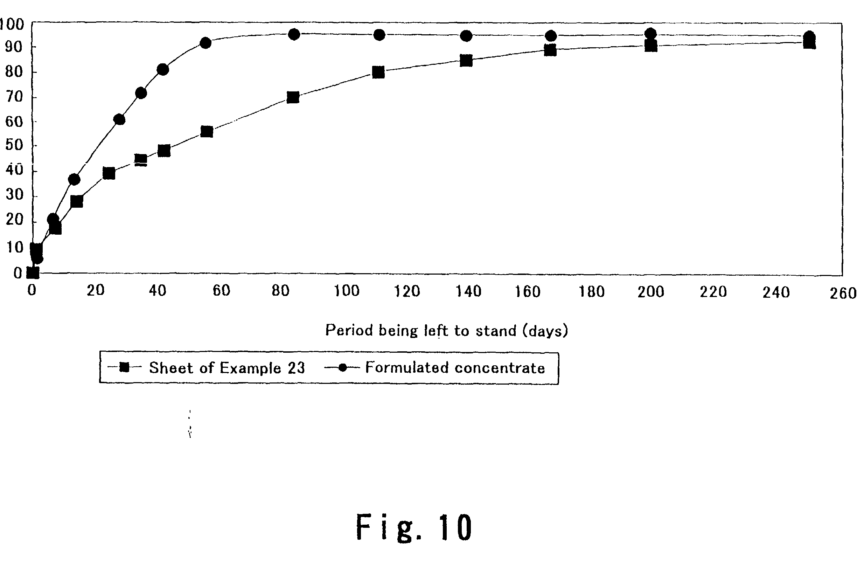

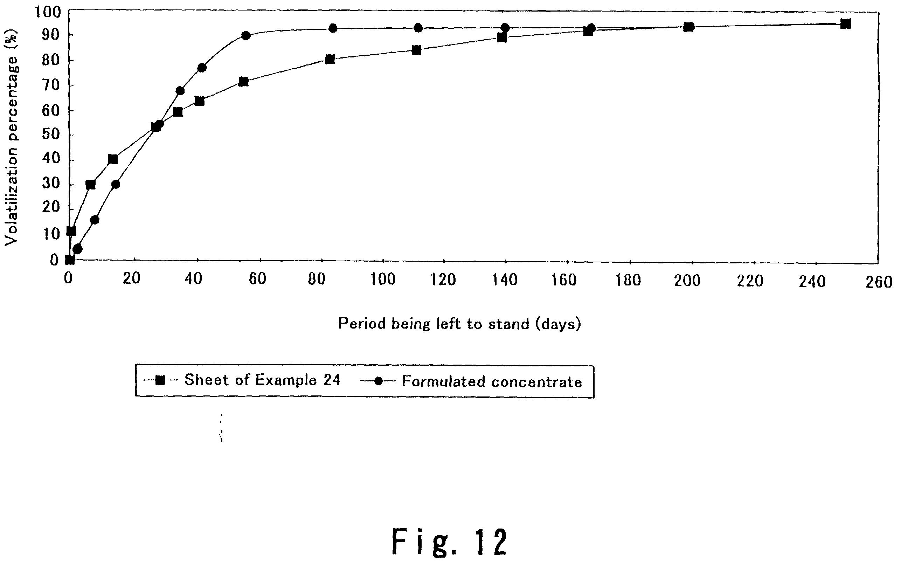

Using the gel-like molded object sheets of Examples 23 to 24, the volatilization test was performed. The results are shown in Fig. 10 and Fig. 12, respectively. As is apparent from Fig. 10 and Fig. 12, the volatilization rate of mentha oil and jasmine oil can be controlled by gelling mentha oil and jasmine oil.

The above embodiment illustrated the case where the drug mixture is prepared in a batch fashion, but the present invention is not limited thereto and can also be applied to the case where the drug mixture is continuously prepared by using, e.g. a static mixer.

As described above, regarding the gel-like resin molded object composition of the present invention, because the resin molded object containing allyl isothiocyanate and a base resin is in the form of a gel, it is made possible to transfer allyl isothiocyanate as the active ingredient to the surface of the molded object with a lapse of time, thereby lengthening the duration period of time when using as a repellent and an antimicrobial and antifungal drug for noxious organisms.

The gel-like resin molded object contains allyl isothiocyanate in the amount within a range of more than 20% by weight and not more than 85% by weight based on the total weight. Therefore, it is made possible to maintain the volatilization of allyl isothiocyanate for a long period of time.

Accordingly, the gel-like resin molded object composition containing allyl isothiocyanate of the present invention can exert the effect of an antimicrobial and antifungal drug for noxious organisms for a long period of time.

Furthermore, the gel-like repellent in a container and the gel-like antimicrobial and antifungal drug in a container of the present invention can control the volatilization of allyl isothiocyanate having comparatively high volatility. Therefore, it is made possible to exert the effect of an antimicrobial and antifungal drug for noxious organisms for a long period of time.

According to the method of preparing the volatile gel-like packaged drug of the present invention, a container is filled with a drug mixture containing a volatile drug and a gelling drug-before curing of the gelling drug. Therefore, it becomes unnecessary to leave until the curing of the gelling drug is completed, thereby making it possible to drastically shorten the manufacturing process.

In the gel-like resin molded object composition prepared by gelling a volatile drug of the present invention using polyurethane as a gelling drug, a volatile substance as an active ingredient is retained in a gel. Therefore, it is made possible to transfer the volatile substance to the surface of the molded object with a lapse of time, thereby maintaining the volatilization of the volatile drug for a long period of time.

## Claims

1. A gel-like resin molded object composition comprising allyl isothiocyanate and a resin base.

2. A gel-like resin molded object composition according to claim 1, wherein said allyl isothiocyanate is contained in the amount within a range of more than 20% by weight and not more than 85% by weight based on the total weight of said gel-like resin molded object.

3. A gel-like resin molded object composition according to any one of claims 1 to 2, wherein the rubber hardness of said gel-like resin molded object is within a range from 0.1 to 100.

4. A gel-like resin molded object composition according to any one of claims 1 to 3, wherein said gel-like resin molded object is in the form of a bulk, sheet, film, particle, powder or coating.

5. A gel-like resin molded object composition according to any one of claims 1 to 4, wherein said resin base is a polyurethane resin.

6. A gel-like repellent composition comprising the gel-like resin molded object composition of any one of claims 1 to 5.

7. A gel-like repellent composition according to claim 6, which is used for noxious organisms.

8. A gel-like repellent composition according to claim 7, wherein said noxious organisms are selected from the group consisting of cockroaches, weevils, termites, rats, moles, dogs, cats, deer, crows, bears, and pigeons.

9. A gel-like repellent composition according to any one of claims 6 to 8, which is disposed under the floor of buildings.

10. A gel-like repellent composition according to any one of claims 6 to 8, which is disposed on the rear side of the ceiling of buildings.

11. A gel-like repellent composition according to any one of claims 6 to 8, which is disposed in transport facilities.

12. A gel-like antimicrobial and antifungal composition comprising the gel-like resin molded object composition of any one of claims 1 to 5.

13. A gel-like antimicrobial and antifungal composition according to claim 12, which is disposed in electrical appliances.

14. A gel-like antimicrobial and antifungal composition according to claim 12, which is disposed in transport facilities.

15. A volatile gel-like packaged drug comprising the gel-like resin molded object composition of any one of claims 1 to 5 and a container, said gel-like resin molded object composition being contained in said container to control the volatilization rate of said allyl isothiocyanate.

16. A volatile gel-like repellent contained in a container, **characterized in that** the gel-like resin molded object composition in the volatile gel-like packaged drug of claim 15 is used as a repellent contained in a container for noxious organisms.

17. A gel-like repellent according to claim 16, wherein said noxious organisms are selected from the group consisting of cockroaches, weevils, termites, rats, moles, dogs, cats, deer, crows, bears and pigeons.

18. A gel-like repellent contained in a container according to claim 16 or 17, wherein said container is a container provided with vent holes.

19. A gel-like repellent contained in a container according to claim 16 or 17, wherein said container is a packaging bag comprising a film through which said allyl isothiocyanate can permeate.

20. A gel-like repellent contained in a container according to any one of claims 16 to 19, which is disposed under the floor of buildings.

21. A gel-like repellent contained in a container according to any one of claims 16 to 19, which is disposed on the rear side of the ceiling of buildings.

22. A gel-like repellent contained in a container according to any one of claims 16 to 19, which is disposed in transport facilities.

23. A gel-like antimicrobial and antifungal drug contained in a container, **characterized in that** the gel-like resin molded object composition in the volatile gel-like packaged drug of claim 15 is used as a gel-like antimicrobial and antifungal drug.

24. A gel-like antimicrobial and antifungal drug contained in a container according to claim 23, wherein said container is a container provided with vent holes.

25. A gel-like antimicrobial and antifungal drug contained in a container according to claim 23, wherein said container is a packaging bag comprising a film through which said allyl isothiocyanate can permeate.

26. A gel-like antimicrobial and antifungal drug contained in a container according to any one of claims 23 to 25, which is disposed in electrical appliances.

27. A gel-like antimicrobial and antifungal drug contained in a container according to any one of claims 23 to 25, which is disposed in transport facilities.

28. A method of preparing a volatile gel-like packaged drug comprising a gel-like resin molded object composition containing a volatile drug and a gel base, and a container partly comprising at least a packaging material through which a volatile gas of said volatile drug can permeate, said gel-like resin molded object composition being contained in said container, said method comprises:
preparing a drug mixture containing a volatile drug and a gelling drug;
filling said container with said drug mixture; and
gelling said drug mixture thereby to form a gel-like resin molded object composition.

29. A method of preparing a volatile gel-like packaged drug according to claim 28, wherein said volatile drug is allyl isothiocyanate.

30. A method of preparing a volatile gel-like packaged drug according to claim 29, wherein said allyl isothiocyanate is contained in the amount within a range of more than 20% by weight and not more than 85% by weight based on the total weight of said drug mixture.

31. A method of preparing a volatile gel-like packaged drug according to any one of claims 28 to 30, wherein said gelling drug is a polyurethane resin.

32. A method of preparing a volatile gel-like packaged drug according to claim 31, wherein the rubber hardness of said gel-like resin molded object after gelling is within a range from 0.1 to 100.

33. A method of preparing a volatile gel-like packaged drug according to any one of claims 28 to 32, wherein said packaging material through which a volatile gas of said volatile drug can permeate is a film made of a material selected from the group consisting of polyethylene, polypropylene, ethylene-vinyl acetate, polyethylene terephthalate, polyvinyl chloride, nylon, polyacetal, and laminate films thereof.

34. A method of preparing a volatile gel-like packaged drug according to any one of claims 28 to 33, wherein said container is in the form of a bag and said volatile gel-like packaged drug is in the form of a sheet.

35. A method of preparing a volatile gel-like packaged drug according to any one of claims 28 to 34, wherein the exterior of said container is further provided with an aluminum foil laminated on said gas-permeable packagirg material.

36. A gel-like resin molded object composition comprising a volatile drug and polyurethane.

37. A gel-like resin molded object composition according to claim 36, wherein the rubber hardness of said gel-like resin molded object is within a range from 0.1 to 100.

38. A gel-like resin molded object composition according to claim 36 or 37, wherein said polyurethane is prepared from polyisocyanate which has two or more isocyanate functionalities.

39. A gel-like resin molded object composition according to claim 38, wherein said polyurethane is prepared from a polyisocyanate compound selected from the group consisting of hexamethylene diisocyanate, isophorone diisocyanate, tetramethylxylene diisocyanate, isocyanurate-modified compounds, buret-modified compounds and derivatives thereof, 1,3,6-hexamethylene triisocyanate, hydrogenated xylylene diisocyanate, and hydrogenated diphenylmethane diisocyanate.

40. A gel-like resin molded object composition according to any one of claims 36 to 39, wherein said volatile drug is a compound selected from the group consisting of repellents, insect repellents, fungicides, insecticides, antimicrobials, and pesticides.

41. A gel-like resin molded object composition according to claim 40, wherein said volatile drug is mentha oil.

42. A gel-like resin molded object composition according to claim 41, wherein said mentha oil is contained in the amount within a range of more than 20% by weight and not more than 40% by weight based on the total weight of said gel-like resin molded object.

43. A gel-like resin molded object composition according to claim 40, wherein said volatile drug is jasmine oil.

44. A gel-like resin molded object composition according to claim 43, wherein said jasmine oil is contained in the amount within a range of more than 20% by weight and not more than 40% by weight based on the total weight of said gel-like resin molded object.

45. A gel-like resin molded object composition according to any one of claims 36 to 44, wherein said gel-like resin molded object is in the form of a bulk, sheet, film, particle, powder or coating.

46. A volatile gel-like packaged drug comprising the gel-like resin molded object of any one of claims 36 to 45 and a container, said gel-like resin molded object being contained in said container to control the volatilization rate of said volatile drug.
